# EUROPEAN PATENT APPLICATION

(11) **EP 2 760 111 A1**
(43) Date of publication of application: **30.07.2014**
(21) Application number: 13153100.6
(22) Date of filing: 29.01.2013
(51) Int. Cl.: H02K 1/24

(54) **Cogging torque and torque ripple reduction of an electrically excited generator by alternatively extending rotor pole shoes**

(71) Applicant: Siemens Aktiengesellschaft, 80333 München (DE)
(72) Inventor: Azar, Ziad, Sheffield, S6 2NR (GB)

(57) **Abstract**

The present invention relates to a rotor (100) for an electrical machine, in particular an electrically excited generator for a wind turbine, The rotor (100) comprises a rotor body (101) extending along a circumferential direction (102) around a rotary axis (103) of the rotor (100), a rotor tooth with a first pole shoe (111) and a second pole shoe (121). The rotor tooth extends from a surface (105) of the rotor body (101) along a radial direction (104) with respect to the rotary axis (103). The first pole shoe (111) and the second pole shoe (121) are arranged at a free end of the rotor tooth. The first pole shoe (111) comprises a first offset (112) with respect to the second pole shoe (121) along a first direction (114) which is parallel to the circumferential direction (102). The second pole shoe (121) comprises a second offset (122) with respect to the first pole shoe (111) along a second direction (124) which is anti-parallel to the first direction (114).

## Description

### Field of invention

The present invention relates to a rotor for an electrical machine and to a generator for a wind turbine, in particular for a direct drive wind turbine. Moreover, the present invention relates to a method of manufacturing the rotor for the electrical machine.

### Art background

Modern wind turbines are designed for using a direct drive technology, wherein a generator is directly connected via a main shaft to a rotor of the direct drive wind turbine. This requires a large diameter of the rotor and the stator of the generator. The generator comprises permanent magnets which are installed at the rotor and windings which are installed at the stator. During rotation of the rotor, the interacting between the rotor poles and stator slotting produces cogging torque and thus torque ripple. Hence, it is an aim to reduce the cogging torque and the torque ripple. Normally, continuous or step skewing techniques are used to reduce the cogging torque and the torque ripple. However, such techniques are practically complex to implement in electrically excited machine.

### Summary of the Invention

It may be an object of the present invention to reduce the cogging torque and the torque ripple of an electrical machine.

This object is solved by a rotor of an electrical machine, by a generator for a wind turbine and by a method of manufacturing a rotor according to the independent claims.

According to a first aspect of the present invention, a rotor for an electrical machine, in particular a generator for a wind turbine, is presented. The rotor comprises a rotor body extending along a direction around a rotary axis of the rotor body. Furthermore, the rotor comprises a rotor tooth. The rotor tooth extends from a surface of the rotor body along a radial direction with respect to the rotary axis. The first pole shoe and the second pole shoe are arranged at a free end of the rotor tooth one after another along a direction parallel to the rotary axis.

The first pole shoe comprises a first offset with respect to the second pole shoe along a first direction which is parallel to the circumferential direction. The second pole shoe comprises a second offset with respect to the first pole shoe along a second direction which is antiparallel to the first direction.

According to a further aspect of the present invention, a method of manufacturing a rotor for an electrical machine, in particular a generator for a wind turbine, is described. A rotor body extending along a circumferential direction around a rotary axis of the rotor body is formed. Furthermore, a rotor tooth is formed. The rotor tooth extends from a surface of the rotor body along a radial direction with respect to the rotary axis. A first pole shoe and a second pole shoe are arranged at a free end of the rotor tooth one after another along a direction parallel to the rotary axis. The first pole shoe comprises a first offset with respect to the second pole shoe along its first direction which is parallel to the circumferential direction. The second pole shoe comprises a second offset with respect to the first pole shoe along a second direction which is antiparallel to the first direction.

The electrical machine (i.e. electrical transducer) may be for example an electrical motor or a generator. Specifically, the electrical machine may be a wind power generator of a wind turbine, in particular for a direct drive wind turbine. Such a respective generator comprises a stator and the above-described rotor, wherein the rotor is rotatable with respect to the stator around a rotary axis. The electrical machine converts electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

The electrical machine may be in particular an Electrically Excited Generator. The excitation in the Electrically Excited Generator is obtained from electrical coils/windings that are concentrated around the rotor teeth and excited by e.g. DC current.

The electrical machine comprising the above described rotor may be used in many applications such as electric vehicles (i.e. the electromechanical transducer is a motor) or in power generation systems (i.e. the electromechanical transducer is a generator) such as for instance in wind turbines. The electrical machine may be in particular in so called Direct Drive (DD) wind turbines, wherein the generator is directly connected via a main shaft to (a hub of) a rotor of the respective DD wind turbine.

The electrical machine comprises the above described rotor and a stator. The stator is an assembly, which represents the stationary part of the electrical machine. The rotor is an assembly, which represents the moving part of the electrical machine. The stator for the electrical machine may be for example a stator which surrounds the (internal) rotor of the electrical machine or may be a stator which is surrounded by the (external) rotor of the electrical machine.

A stator of the electrical machine generally comprises e.g. a tubular profile with a ring-shaped cross-sectional shape. Accordingly, the rotor body of the rotor comprises e.g. a corresponding circular extension along the circumferential direction which corresponds to the tubular profile of the stator.

The rotor comprises a center axis which is generally coaxial with a rotary axis of the rotor. Around the rotary axis of the rotor body the circumferential direction is defined. Furthermore, a radial direction runs from the rotor body to the rotary axis, wherein the radial direction is perpendicular to the circumferential direction and to the centre axis/rotary axis and runs through the center axis. Between the stator and the rotor a gap exists.

Along the circumferential direction, stator teeth extend of a stator body in a radial direction, wherein between the respective stator teeth windings of the stator are installed.

Accordingly, along the circumferential direction, the rotor teeth extend from the rotor body along a radial direction, wherein between the respective rotor teeth windings of the rotor are installed. By the windings arranged at the rotor, an electrically induced magnet field is generatable.

The rotor tooth extends from the rotor body along the radial direction and generally in the direction to the stator teeth. At the free ends of the rotor tooth, the respective pole shoes are mounted. The free end of the rotor tooth defines generally the nearest location of the rotor to the stator.

In a further exemplary embodiment, the rotor tooth comprises a first rotor tooth and a second rotor tooth, wherein the first rotor tooth and the second rotor tooth extend from a surface of the rotor body along the radial direction with respect to the rotary axis. The first rotor tooth and the second rotor tooth are arranged one after another along a direction parallel or almost parallel to the rotary axis, wherein the first pole shoe is arranged at a free end of the first rotor tooth and wherein the second pole shoe is arranged at a free end of the second rotor tooth. The first and the second rotor teeth are attached to each other and one after another along the rotary axis. Particularly, the first, the second or a plurality of rotor teeth may be attached along the rotary axis one after another and thereby form a rotor stack.

In particular, according to a further aspect of the present invention, the first rotor tooth and the second rotor tooth may be formed integrally with respect to each other.

Alternatively or additionally, the rotor body comprises a first rotor body element and a second rotor body element, wherein the first rotor tooth is arranged at the first rotor body element and the second rotor tooth is arranged at the second rotor body element such that the rotor stack is formed from the plurality of rotor body elements.

The respective pole shoes are a structure composed of material of high magnetic permeability that serves to direct the magnetic field which is generated e.g. by the windings. The pole shoes may be made of iron. The pole shoes can be of the same material as the rotor body of even different magnetic iron. In this case as an additional benefit of the present invention the rotor body may be formed monolithically as one solid piece while the respective pole shoes are structurally divided and may be laminated to limit the eddy current, thus well reduction of the rotor iron loss.

One known technical problem of electrical machines comprising electrically excited is cogging torque. Cogging torque is produced by the interacting between the rotor poles and the stator slotting due to the fact that the rotor tends to move form the high reluctance position to the lower reluctance position. Cogging torque is an undesired effect that contributes to an output ripple (also called torque ripple), to vibrations, and/or to noise in an electromechanical transducer.

By the approach of the present invention, the torque ripple and the cogging torque is reduced such that a constant average torque induced by the pole shoes is achieved. This average torque is achieved by the first and second offset of the respective pole shoes of the rotor teeth.

Specifically, the first pole shoe comprises a first offset with respect to the second pole shoe along a first direction which is parallel to the circumferential direction and the second pole shoe comprises a second offset with respect to the first pole shoe along a second direction which is anti-parallel to the first direction. This means, that two adjacent pole shoes of adjacent rotor teeth extend with respect to each other alternatively.

During rotation of the rotor, for example the first pole shoe reaches a (in circumferential direction) forward located winding of the stator whereas the second pole shoe still covers a (in circumferential direction) rearward located winding of the stator. Hence, if the second pole shoe leaves the coverage of the rearward winding, the first pole shoe already covers the forward winding. This results in an opposite shifting of waveforms of the generated cogging torque and torque ripple by the first and second pole shoe. If the first offset and the second offset of the respective pole shoes are adequately adapted, a ripple cancellation, i.e. a cancellation of the cogging torque and the torque ripple, may be achieved.

Furthermore, besides the ripple cancellation, by adjusting an offset of the respective pole shoes, the design of the rotor body and rotor teeth need not be amended. Furthermore, it is sufficient if only two pole shoes or only two groups of pole shoes comprise an alternating first and second offset along the circumferential direction in order to achieve the ripple cancellation.

Furthermore, because by the present invention an electrical machine with a reduced cogging torque and torque ripple is formable, the design of the supporting elements (bearing, rotor yoke) may be smaller such that the manufacturing cost and the weight of the electrical machine may be reduced.

According to a further exemplary embodiment, it is outlined that besides the first and the second rotor teeth also a plurality of further third rotor teeth comprising respective third pole shoes may be attached one after another along the rotary axis, wherein each of the third rotor teeth comprises respective third pole shoes with an alternative and different further offsets. In particular, the rotor body comprises a third rotor tooth with a third pole shoe. The first rotor tooth, the second rotor tooth and the third rotor tooth are arranged one after another along a direction parallel to the rotary axis. The third pole shoe is arranged at a free end of the third rotor tooth, wherein the third pole shoe comprises a third offset with respect to the first pole shoe and/or the second pole shoe along the first direction. The third rotor tooth extends from the surface of the rotor body along the circumferential direction.

According to a further exemplary embodiment, the third pole shoe comprises a further third offset with respect to the first pole shoe and/or the second pole shoe along the second direction.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a rotor according to an exemplary embodiment of the present invention;
Fig. 2 shows a schematical view of an electrical machine comprising a stator and a rotor according to an exemplary embodiment of the present invention;
Fig. 3 shows a schematical view of a generator comprising an external rotor and an internal stator according to an exemplary embodiment of the present invention;
Fig. 4 shows a diagram of the cogging torque in relation to the rotor position;
Fig. 5 shows a diagram of the torque ripple in relation to the rotor position; and
Fig. 6 shows the torque ripple in relation to the extending angle of the pole shoes according to an exemplary embodiment of the present invention.

### Detailed Description

The illustrations in the drawings are schematic. It is noted that in different figures similar or identical elements are provided with the same reference signs.

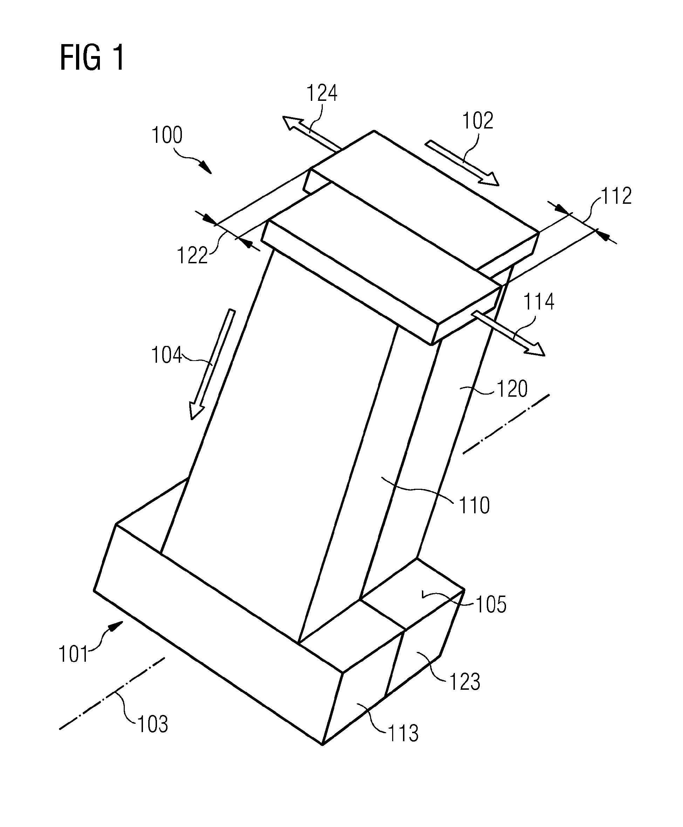

Fig. 1 shows a schematical view of a section of a rotor 100 for an electrical machine, in particular an electrically excited generator for a wind turbine.

In Fig. 1, exemplarily a rotor body 101 and a rotor tooth comprising two stator teeth 110, 120 which are mounted to the rotor body 101 are shown. The first rotor tooth 110 comprises a first pole shoe 111 and the second rotor tooth 120 comprises a second pole shoe 121. The first rotor tooth 110 and the second rotor tooth 120 extend from a surface 105 of the rotor body 101 along a radial direction 104 with respect to the rotor axis 103. The first rotor tooth 110 and the second rotor tooth 120 are arranged one after another along a direction parallel to the rotary axis 103. The first pole shoe 111 is arranged at a free end of the first rotor tooth 110 and the second pole shoe 121 is arranged at a free end of the second rotor tooth 120.

According to the present invention, the first pole shoe 111 comprises a first offset 112 with respect to the second pole shoe 121 along a first direction 114 which is parallel to the circumferential direction 102. The second pole shoe 121 comprises a second offset 122 with respect to the first pole shoe 111 along a second direction 124 which is antiparallel to the first direction 114.

As can be taken from Fig. 1, the rotor body 101 may comprise a first rotor body element 113 and a second rotor body element 123, wherein the first rotor tooth 110 is arranged at the first rotor body element 113 and the second rotor tooth 120 is arranged at the second rotor body element 123. Hence, the first rotor body element 113 and the second rotor body element 123 describe rotor lamination sheets, wherein the whole package of lamination sheets may form a rotor lamination. Alternatively, the first rotor tooth 110 and the second rotor tooth 120 are formed in an integral manner.

Alternatively, the rotor body 101 may be solid and made from one piece and hence formed monolithically, wherein the first pole shoe 111 and the second pole shoe 121 are formed from separated pieces/elements with respect to each other. The separated elements of the first pole shoe 111 and the second pole shoe 121 may be stacked along the rotor axis 103 and may form a lamination for reducing eddy currents.

As can be seen in Fig. 1, the first offset 112 describes an offset of the first pole shoe 111 along a first direction 114 with respect to the second pole shoe 121 along the circumferential direction 102. Accordingly, the second offset 122 describes an offset of the second pole shoe 121 along a second direction 124, which is antiparallel to the first direction 114.

The first offset 112 and the second offset 122 may be defined as the length along the circumferential direction 102. Alternatively, the dimension of the offsets 112, 122 may be described by an extending angle, wherein a first imaginary line is drawn from the rotary axis 103 to the circumferential end edge of the one pole shoe 111; 121 and by drawing a further line from the rotary axis 103 to the circumferential end edge of the other pole shoe 121; 111, wherein the respective offset 112, 122 is described by the angle between the two imaginary lines.

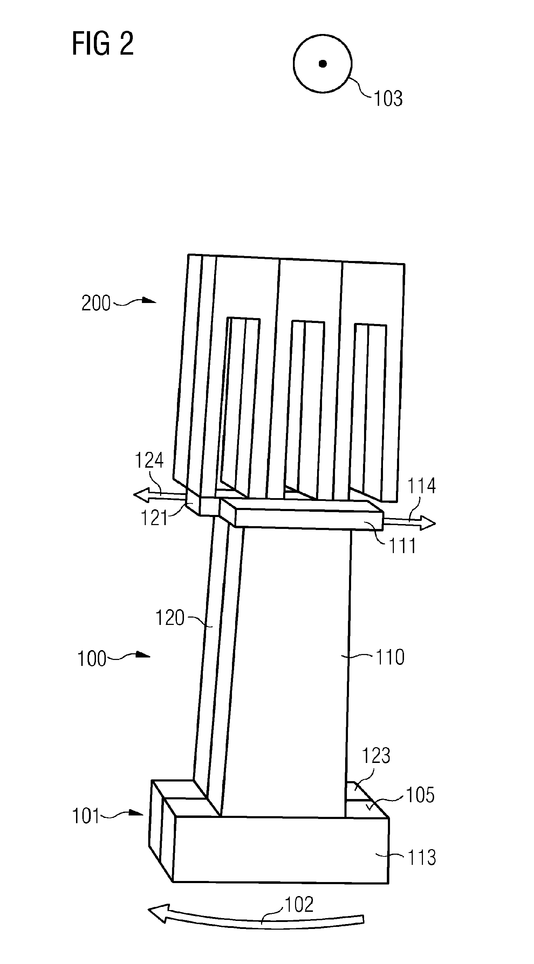

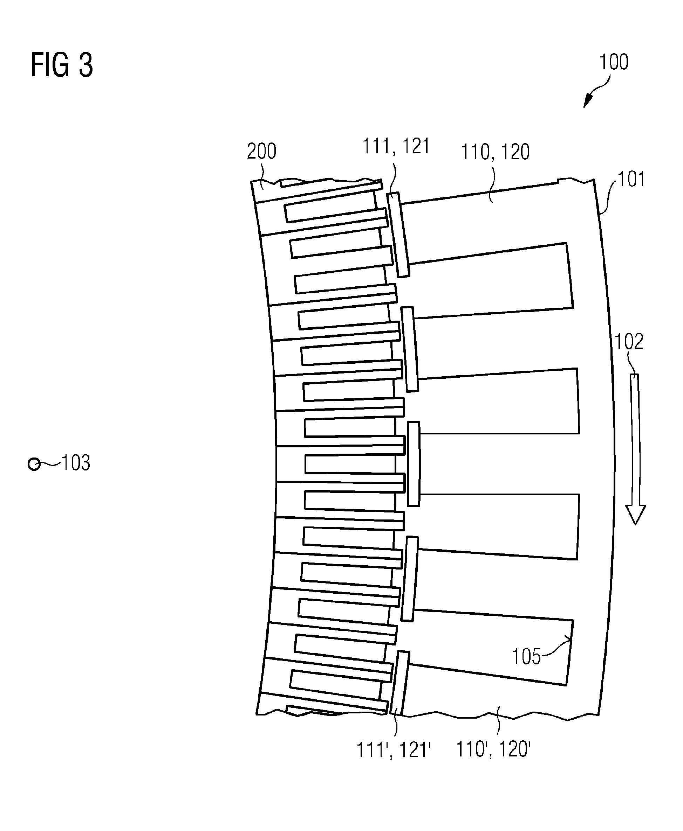

The rotor 100 shown in Fig. 1 may form an internal rotor which is surrounded by a stator 200 or an external rotor 100 which surrounds the stator 200 (see Fig. 2, Fig. 3).

Fig. 2 shows an electrical machine comprising the rotor 100 as shown in Fig. 1 and a stator 200. The rotor 100 shown in Fig. 2 is an external rotor surrounding the stator 200. The stator 200 comprises stator teeth, wherein between two circumferentially adjacent stator teeth stator windings (not shown) are arranged. The stator windings may form 3 phase armature coils which may carry a three phase AC currents. The rotor 100 rotates around the rotary axis 103, such that the rotor teeth 110, 120 and their respective pole shoes 111, 121 passes the respective stator teeth along the circumferential direction 102. As can be taken from Fig. 2, the second offset 122 of the second pole shoe 121 reaches already the stator teeth on the left side whereas the first offset 112 of the first pole shoe 111 still covers the stator tooth on the right side of the stator 200 shown in Fig. 2.

Around the rotor teeth 110, 120, rotor coils forming windings are installed, wherein the rotor coils are excited e.g. by a DC current.

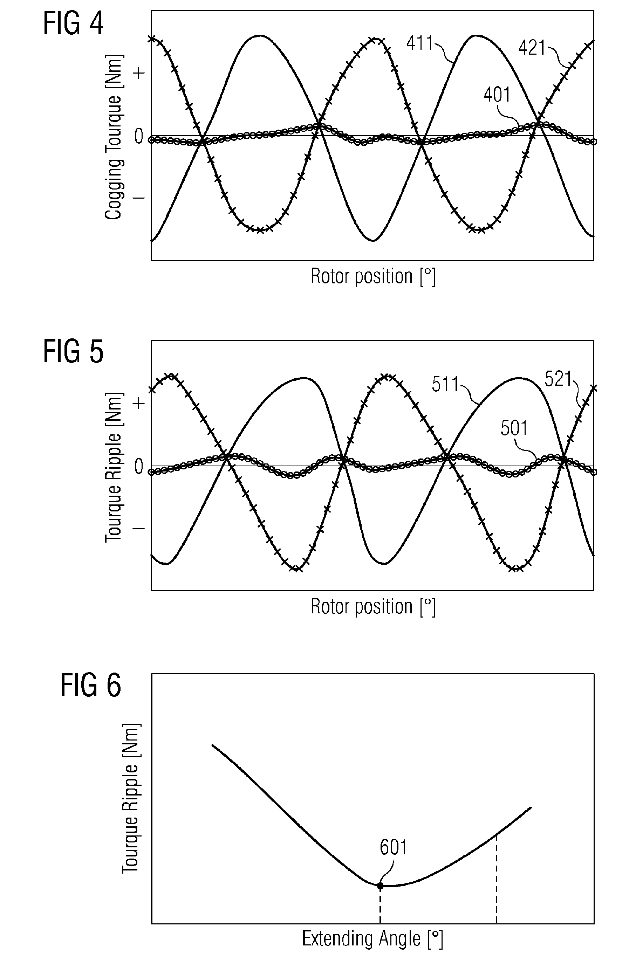

Hence, the first pole shoe 111 and the second pole shoe 121 generate different torques which generates respective cogging torques and torque ripples as shown in Fig. 4 and Fig. 5. If the first offset 112 and the second offset 122 are correctly adjusted, a cancellation of the cogging torque and the torque ripple generated by the respective pole shoes 111, 121 may be cancelled.

Fig. 3 shows a general view of a rotor 100 and a stator 200. The rotor 100 comprises the rotor body 101 which comprises a plurality of first and second rotor teeth 110, 120, 110', 120' which are arranged one after another along the rotary axis 103. Furthermore, besides the first and second rotor teeth 110, 120 along the circumferential direction 102, a plurality of further first and second rotor teeth 110', 120' comprising respective first and second pole shoes 111, 111', 121, 121' are arranged. Between the plurality of first and second rotor teeth 110, 120, 110', 120' respective rotor coils are arranged. For sake of clarity, not all further rotor teeth 110', 120' are described with respective reference signs. In Fig. 3, the rotor 100 is an external rotor which surrounds the stator 200.

Fig. 4 shows a diagram which shows the cogging torque along the ordinates with respect to the rotor position along the axis of abscissa. Specifically, the cogging torque generated by the first pole shoe 411 is shown and the cogging torque 421 generated by the second pole shoe 121 is shown. If the respective first offset 112 and second offset 122 is adjusted adequately, the cogging torque 411 of the first pole shoe 111 and the cogging torque 421 of the second pole shoe 121 balance and cancel each other such that an average cogging torque 401 is generated which is almost zero.

The rotor position describes the rotational position of the rotor. If the rotor rotates 360°, a full rotation of the rotor 100 is achieved. The cogging torque may be described with the dimension Newton meter (Nm).

Fig. 5 shows similar to Fig. 4 a diagram, wherein a torque ripple is shown along the ordinate with respect to the rotor position which is shown along the abscissa. Specifically, the torque ripple generated by the first pole shoe 511 is shown and the torque ripple 521 generated by the second pole shoe 121 is shown. If the respective first offset 112 and second offset 122 is adjusted adequately, the torque ripple 511 of the first pole shoe 111 and the torque ripple 521 of the second pole shoe 121 balance and cancel each other such that an average torque ripple 501 is generated which is almost zero.

Fig. 6 shows a run of the torque ripple with respect to the extending angle of the respective pole shoes 111, 121. The extending angle describes the size of the first offset 112 and the respective second offset 122. For each electrical machine tests with varying offsets 112, 122 of the respective pole shoes 111, 121 may be accomplished and the torque ripple may be measured under laboratory conditions. If the minimum torque ripple 601 has been measured, an optimal size and dimension of the first offset 112 and the second offset 122 (i.e. an optimal extending angle) has been found out.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor (100) for an electrical machine, in particular a generator for a wind turbine, the rotor (100) comprising
a rotor body (101) extending along a circumferential direction (102) around a rotary axis (103) of the rotor (100),
a rotor tooth with a first pole shoe (111) and a second pole shoe (121),
wherein the rotor tooth extends from a surface (105) of the rotor body (101) along a radial direction (104) with respect to the rotary axis (103),
wherein the first pole shoe (111) and the second pole shoe (121) are arranged at a free end of the rotor tooth one after another along a direction parallel to the rotary axis (103), wherein the first pole shoe (111) comprises a first offset (112) with respect to the second pole shoe (121) along a first direction (114) which is parallel to the circumferential direction (102), and
wherein the second pole shoe (121) comprises a second offset (122) with respect to the first pole shoe (111) along a second direction (124) which is anti-parallel to the first direction (114).

2. Rotor (100) according to claim 1,
wherein the rotor tooth comprises a first rotor tooth (110) and a second rotor tooth (120),
wherein the first rotor tooth (110) and the second rotor tooth (120) extend from a surface (105) of the rotor body (101) along the radial direction (104) with respect to the rotary axis (103),
wherein the first rotor tooth (110) and the second rotor tooth (120) are arranged one after another along a direction parallel to the rotary axis (103),
wherein the first pole shoe (111) is arranged at a free end of the first rotor tooth (110),
wherein the second pole shoe (121) is arranged at a free end of the second rotor tooth (120).

3. Rotor (100) according to claim 2,
wherein the rotor body (101) comprises a first rotor body element (113) and a second rotor body element (123),
wherein the first rotor tooth (110) is arranged at the first rotor body element (113) and the second rotor tooth (120) is arranged at the second rotor body element (123).

4. Rotor (100) according to claim 2 or 3,
wherein the first rotor tooth (110) and the second rotor tooth (120) are formed in an integral manner.

5. Rotor (100) according to one of the claims 2 to 4, wherein the rotor body (101) comprises a third rotor tooth with a third pole shoe,
wherein the first rotor tooth (110), the second rotor tooth (120) and the third rotor tooth are arranged one after another along a direction parallel to the rotary axis (103), wherein the third pole shoe is arranged at a free end of the third rotor tooth,
wherein the third pole shoe comprise a third offset with respect to the first pole shoe (111) and/or the second pole shoe (121) along the first direction (114).

6. Rotor (100) according to claim 5,
wherein the third pole shoe comprises a further third offset with respect to the first pole shoe (111) and/or the second pole shoe (121) along the second direction (124).

7. Generator for a wind turbine, in particular for a direct drive wind turbine, the generator comprising
a stator (200), and
a rotor (100) according to one of the claims 1 to 6,
wherein the rotor (100) is rotatable with respect to the stator (200) around the rotary axis (103).

8. Generator according to claim 7,
wherein the rotor (100) is an external rotor which surrounds the stator (200).

9. Method of manufacturing a rotor (100) for an electrical machine, in particular an electrically excited generator for a wind turbine, the method comprising
forming a rotor body (101) extending along a circumferential direction (102) around a rotary axis (103) of the rotor body (101),
forming a rotor tooth,
wherein the rotor tooth extends from a surface (105) of the rotor body (101) along a radial direction (104) with respect to the rotary axis (103),
arranging a first pole shoe (111) at a free end of the rotor tooth,
arranging a second pole shoe (121) at the free end of the rotor tooth,
wherein the first pole shoe (111) and the second pole shoe (121) are arranged one after another along a direction parallel to the rotary axis (103),
wherein the first pole shoe (111) comprises a first offset (112) with respect to the second pole shoe (121) along a first direction (114) which is parallel to the circumferential direction (102), and
wherein the second pole shoe (121) comprises a second offset (122) with respect to the first pole shoe (111) along a second direction (124) which is anti-parallel to the first direction (114).
